(19) Europäisches Patentamt / European Patent Office / Office européen des brevets

(11) **EP 4 481 858 A1**

(12) **EUROPEAN PATENT APPLICATION**
published in accordance with Art. 153(4) EPC

(43) Date of publication:
**25.12.2024 Bulletin 2024/52**

(21) Application number: 23769538.2

(22) Date of filing: **23.02.2023**

(51) International Patent Classification (IPC):
$H01M\ 4/62$ (2006.01)          $H01M\ 4/36$ (2006.01)
$H01M\ 4/485$ (2010.01)

(52) Cooperative Patent Classification (CPC):
Y02E 60/10

(86) International application number:
**PCT/CN2023/077848**

(87) International publication number:
**WO 2023/174030 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.03.2022 CN 202210246513**

(71) Applicant: **Ningbo Ronbay New Energy
Technology Co., Ltd.
Yuyao Ningbo, Zhejiang 315402 (CN)**

(72) Inventors:
  • **WANG, Chao**
    **Ningbo, Zhejiang 315402 (CN)**
  • **FENG, Daoyan**
    **Ningbo, Zhejiang 315402 (CN)**
  • **JIANG, Miao**
    **Ningbo, Zhejiang 315402 (CN)**
  • **YE, Chao**
    **Ningbo, Zhejiang 315402 (CN)**
  • **XIAO, Xuan**
    **Ningbo, Zhejiang 315402 (CN)**
  • **YAN, Xufeng**
    **Ningbo, Zhejiang 315402 (CN)**
  • **LIU, Rui**
    **Ningbo, Zhejiang 315402 (CN)**
  • **LEE, Jonghee**
    **Ningbo, Zhejiang 315402 (CN)**
  • **SUN, Hui**
    **Ningbo, Zhejiang 315402 (CN)**
  • **YOU, Sangyul**
    **Ningbo, Zhejiang 315402 (CN)**

(74) Representative: **Bandpay & Greuter
11 rue Christophe Colomb
75008 Paris (FR)**

(54) **TERNARY COMPOSITE MATERIAL FOR ALL-SOLID-STATE BATTERY AS WELL AS PREPARATION METHOD THEREFOR AND APPLICATION THEREOF**

(57) The present invention provides a ternary composite material for an all-solid-state battery, including a ternary material and a fast ion conductor of $Li_xM_yF_{x+3y}$ in-situ coated on the surface of the ternary material; the application also provides a preparation method for ternary composite material and its application. On the one hand, the presence of $Li_xM_yF_{x+3y}$ in the ternary composite material provided by the present application improves the interfacial contact between the ternary positive electrode material and the solid electrolyte, improves the high-voltage resistance performance of the solid electrolyte, and reduces side reactions between the ternary positive electrode and the solid electrolyte and the electrolyte decomposition caused by high voltage. On the other hand, the fast ion conductor property of $Li_xM_yF_{x+3y}$ effectively improves the lithium ion conductivity of the ternary positive electrode material and reduces the residual lithium on the surface of the ternary positive electrode material. The present invention has simple operation, low raw material cost and small equipment investment in the whole preparation process and is suitable for mass production.

EP 4 481 858 A1

FIG. 1

**Description**

This application claims the priority of the Chinese Patent Application No. 202210246513.5, entitled "TERNARY COMPOSITE MATERIAL FOR ALL-SOLID-STATE BATTERY, PREPARATION METHOD THEREOF AND APPLICATION THEREOF", and filed with the China National Intellectual Property Administration (CNIPA) on March 14, 2022, the entire contents of which are incorporated by reference in this application.

**TECHNICAL FIELD**

The present invention relates to the technical field of lithium-ion batteries, and in particular to a ternary composite material for all-solid-state battery, preparation method thereof and application thereof.

**BACKGROUND**

Nickel-rich ternary positive electrode material $LiNi_{1-x-y}Co_xMn_yO_2$ (NCM) has attracted much attention due to its ultra-high capacity and has the potential to replace traditional positive electrode material $LiCoO_2$ in lithium-ion battery applications.

However, the existing ternary materials still have some shortcomings, such as low discharge efficiency in the first cycle, poor battery performance at high rate, and serious lithium-nickel cations mixing in the material, which results in the poor cycle stability of the material and the low discharge platform.

In addition, for all-solid-state batteries, since the ternary NCM is a mixture of high ion and electronic conductivity, the solid electrolyte is a single lithium ion conductor. Therefore, the contact between the ternary NCM and the solid electrolyte will cause lithium ions to move from the solid electrolyte to the ternary NCM due to the large chemical potential difference, resulting in the formation of a space charge layer and the occurrence of interfacial reactions, and will produce high interfacial resistance that affects the battery's cycling capacity.

In order to solve these problems and make the ternary materials more suitable for people's application needs, a lot of work has been applied to the modification research of ternary NCM. A typical and effective method is surface coating modification. For example, $Al_2O_3$, $TiO_2$, $SiO_2$, $ZrO_2$, $La_2O_3$, $Y_2O_3$, ZnO, etc. are used as surface coating materials to improve their performance; however, these coating materials only adhere to the surface of ternary NCM and lack good ionic conductivity to accelerate the electrochemical reaction rate and the diffusion rate of lithium ions. Moreover, most of positive electrode material manufacturers adopt dry coating, which is to directly mix and sinter the nano-sized coating material with the substrate to obtain the coated positive electrode material. For materials prepared by this method, most of the coatings only adhere to or attach to the positive electrode material, rather than evenly covering the surface of the positive electrode material, therefore, they are easily peeled off by external mechanical forces and are more likely to agglomerate on their own.

**SUMMARY**

The technical problem solved by the present invention is to provide a ternary composite material. The ternary composite positive electrode material of the present application can improve the interface contact between the ternary positive electrode material and the solid electrolyte, and at the same time can also improve the lithium ion conductivity of the ternary positive electrode material.

In view of this, the present application provides a ternary composite material for an all-solid-state battery, including a ternary material and a fast ion conductor in situ coated on the surface of the ternary material, the fast ion conductor being represented by formula (I);

$$Li_xM_yF_{x+3y} \qquad (I);$$

where M is a trivalent metal ion;

$$1 \le x \le 3, \ 1 \le y \le 3.$$

Preferably, the M is selected from Co, Fe, Al or Ce; and the fast ion conductor is selected from $Li_3AlF_6$, $LiCoF_4$, $Li_3FeF_6$, $Li_3CoF_6$, $Li_3Ce_2F_9$, $LiFeF_4$, $Li_3CeF_6$, $LiAlF_4$ or $Li_3Co_2F_9$.

Preferably, the high-nickel ternary material is $LiNi_aCo_bR_{1-a-b}O_2$, where R is Al or Mn, 0.6<a<0.96, and 0<b≤0.1.

Preferably, the average particle size of $Li_xM_yF_{x+3y}$ is 5nm or more, and the high-nickel ternary composite material has a D50 of 3-5μm, a specific surface area of 0.1-1m²/g, and a coating ratio of >85%.

The present application also provides a method for preparing the ternary composite material, including the following steps:

A) mixing a lithium source, a fluorine source and a trivalent metal compound in a stoichiometric ratio to obtain $Li_xM_yF_{x+3y}$ precursor;

B) adding the $Li_xM_yF_{x+3y}$ precursor into a ternary material and mixing to obtain a composite material;

C) sintering the composite material at high temperature in a pure oxygen atmosphere to obtain $Li_xM_yF_{x+3y}$-coated ternary composite material.

Preferably, the lithium source is selected from one or more of lithium nitrate, lithium hydroxide, lithium carbonate and lithium fluoride; the fluorine source is selected from one or more of ammonium fluoride, ammonium bifluoride, hydrogen fluoride, aluminum fluoride and lithium fluoride; and the trivalent metal compound is selected from one or more of cobalt nitrate, ferric nitrate, cerium nitrate, aluminum nitrate, cobalt oxide, iron oxide, cerium oxide, aluminum oxide, cobalt fluoride, iron fluoride, cerium fluoride, aluminum fluoride, cobalt hydroxide, ferric hydroxide, cerium hydroxide and aluminum hydroxide.

Preferably, the addition amount of the $Li_xM_yF_{x+3y}$ precursor is 0.1-15wt% of the ternary material.

Preferably, in step A), the mixing method is one or more of mechanical stirring, magnetic stirring and mechanical ball milling; in step A), a mixing time is 10 hours to 30 hours; in step B), the mixing method is one or more of mechanical stirring, magnetic stirring and mechanical ball milling; in step B), a mixing time is 10 hours to 30 hours.

Preferably, in step C), a sintering temperature is 250-650°C and a sintering time is 5-20 hours.

The present application also provides a solid-state lithium-ion battery, including a positive electrode and a negative electrode, where the material of the positive electrode is the ternary composite material or a ternary composite material prepared by the preparation method.

The present application provides a ternary composite material, which is composed of a ternary material and a fast ion conductor $Li_xM_yF_{x+3y}$ coated on the surface of the ternary material; where the presence of $Li_xM_yF_{x+3y}$ improves the interfacial contact between the ternary positive electrode material and the solid electrolyte, improves the high-voltage resistance performance of the solid electrolyte, reduces the side reactions between the ternary positive electrode and the solid electrolyte and the electrolyte decomposition caused by high voltage, and on the other hand, the fast ion conductor properties of $Li_xM_yF_{x+3y}$ effectively improve the lithium ion conduction capacity of the ternary positive electrode material and reduce the residual lithium on the surface of the ternary positive electrode material.

Furthermore, the present application also provides a method for preparing a ternary composite material, which includes uniformly mixing a $Li_xM_yF_{x+3y}$ precursor with a ternary positive electrode material and sintering them at a high temperature in a pure oxygen atmosphere, thereby in situ coating a layer of uniformly distributed fast ion conductor $Li_xM_yF_{x+3y}$ on the surface of the ternary material; this preparation method is beneficial to improving the stability of the coating layer, making it less likely to fall off.

## BRIEF DESCRIPTION OF DRAWINGS

FIG. 1 is an XRD diagram of a $Li_3AlF_6$ precursor sintered at 280°C in Example 1 of the present invention.

FIG. 2 is an SEM image of a ternary positive electrode material before coating in Example 1 of the present invention.

FIG. 3 is an SEM image of the ternary positive electrode materials coated with $Li_3AlF_6$ in Example 1 of the present invention.

FIG. 4 is a charge-discharge rate curve of the ternary positive electrode materials coated with $LiCoF_4$ and uncoated in Example 2 of the present invention.

FIG. 5 is a cycle performance curve of the ternary positive electrode materials coated with $Li_3FeF_6$ and uncoated in Example 3 of the present invention.

FIG. 6 is a charge-discharge curve of the ternary positive electrode materials coated with $Li_3Ce_2F_9$ and uncoated in Example 4 of the present invention.

FIG. 7 is a charge-discharge curve of the ternary positive electrode materials coated with $Li_3CoF_6$ and uncoated in Example 5 of the present invention.

FIG. 8 is a charge-discharge curve of the ternary positive electrode materials coated with $LiFeF_4$ and uncoated in Example 6 of the present invention.

FIG. 9 is a charge-discharge curve of the ternary positive electrode materials coated with different contents of $Li_3AlF_6$ in Example 11 of the present invention.

FIG. 10 is a charge-discharge curve of the ternary positive electrode materials coated with different types of fast ion conductors in Example 12 of the present invention.

FIG. 11 is a charge-discharge curve of the ternary positive electrode materials coated with $Li_3AlF_6$ using different

processes in Example 13 of the present invention.

## DESCRIPTION OF EMBODIMENTS

In order to further understand the present invention, preferred embodiments of the present invention are described below in conjunction with examples. However, it should be understood that these descriptions are only for further illustrating the features and advantages of the present invention, rather than limiting the claims of the present invention.

In view of the poor performance of ternary materials in lithium-ion batteries in the prior art, the present application provides a ternary composite material, where, the surface of the ternary material is in-situ coated with a fast ion conductor $Li_xM_yF_{x+3y}$, which is used as a coating material to modify nickel-rich ternary positive electrode materials, such as $Li_3AlF_6$, $LiCoF_4$, $Li_3FeF_6$, $Li_3CoF_6$, $Li_3Ce_2F_9$, $LiFeF_4$, $Li_3CeF_6$, $LiAlF_4$ or $Li_3Co_2F_9$. These lithium ion conductors not only exhibit excellent ionic conductivity, but also have excellent phase stability and high voltage resistance (1.0-6.5V vs. Li/Li+20) and chemical stability, which can enhance the $Li^+$ diffusion between the solid electrolyte and the positive electrode material and effectively prevent the side reaction between the positive electrode material and the solid electrolyte. Specifically, an embodiment of the present invention discloses a high-nickel ternary composite material, including a ternary material and a fast ion conductor in situ coated on the surface of the ternary material, the fast ion conductor being shown in formula (I);

$$Li_xM_yF_{x+3y} \qquad (I);$$

where M is a trivalent metal ion;

$$1 \leq x \leq 3, \ 1 \leq y \leq 3.$$

In the ternary composite material described in the present application, the M is selected from trivalent metal ions, specifically selected from Co, Fe, Al or Ce; the x is specifically selected from 1, 2 or 3, and the y is specifically selected from 1, 2 or 3; in the present application, the fast ion conductor is selected from $Li_3AlF_6$, $LiCoF_4$, $Li_3FeF_6$, $Li_3CoF_6$, $Li_3Ce_2F_9$, $LiFeF_4$, $Li_3CeF_6$, $LiAlF_4$ or $Li_3Co_2F_9$. The problem with the positive electrode at this stage is that the voltage range of the positive electrode is relatively large (about 2.5-4.4V), and the solid electrolyte will decompose under high voltage, affecting the life of the battery. Ordinary fast ion conductors can only simply improve the material's ion conductivity, while F-based fast ion conductors not only have ion conductivity but also have the property of high-voltage resistance. After coating with the F-based fast ion conductors, it is equivalent to directly adding a high-voltage resistant protective layer to the solid electrolyte and the positive electrode material, which can effectively prevent the decomposition of the solid electrolyte under high voltage, and some F atoms will be doped into the surface layer of the positive electrode material to replace the position of oxygen. Due to the strong electronegativity of F, it can effectively reduce the precipitation of lattice oxygen and effectively improve the structural stability of the material.

In the present application, the ternary material is a ternary material well known to those persons of ordinary skill in the art. In the present application, it is specifically $LiNi_aCo_bR_{1-a-b}O_2$, where R is Al or Mn, $0.6 < a < 0.96$, $0 < b \leq 0.1$; in a specific embodiment, the high-nickel ternary material can be $LiNi_{0.86}Co_{0.09}Mn_{0.05}O_2$.

In the ternary composite material described in the present application, the average particle size of $Li_xM_yF_{x+3y}$ is 5nm or more; and the ternary composite material has a D50 of 3-5$\mu$m, a specific surface area of 0.1-1 $m^2/g$, and a coverage rate of >85%.

The present application also provides a method for preparing the ternary composite material, including the following steps:

A) mixing a lithium source, a fluorine source and a trivalent metal compound in a stoichiometric ratio to obtain $Li_xM_yF_{x+3y}$ precursor;
B) adding the $Li_xM_yF_{x+3y}$ precursor into a ternary material and mixing to obtain a composite material;
C) sintering the composite material at high temperature in a pure oxygen atmosphere to obtain $Li_xM_yF_{x+3y}$ coated ternary composite material.

In the preparation process of the ternary composite material, the present application first prepares the F-based fast ion conductor $Li_xM_yF_{x+3y}$ precursor, specifically, a lithium source, a fluorine source and a trivalent metal compound are mixed according to a stoichiometric ratio to obtain the $Li_xM_yF_{x+3y}$ precursor. In this process, the lithium source is selected from lithium sources familiar to those persons of ordinary skill in the art. In the present application, the lithium source is selected from one or more of lithium nitrate, lithium hydroxide, lithium carbonate and lithium fluoride; the fluorine source is selected from one or more of ammonium fluoride, ammonium bifluoride, hydrogen fluoride, aluminum fluoride and lithium fluoride; the trivalent metal compound is selected from one or more of cobalt nitrate, iron nitrate, cerium nitrate, aluminum nitrate, cobalt oxide, iron oxide, cerium oxide, aluminum oxide, cobalt fluoride, iron fluoride, cerium fluoride, aluminum fluoride, cobalt hydroxide, ferric hydroxide, cerium hydroxide and aluminum hydroxide. The mixing method may be mechanical mixing, magnetic stirring, or mechanical ball milling, and the mixing time is 10 hours to 30 hours, more specifically, the mixing time is 12 hours to 20 hours.

In the present application, the $Li_xM_yF_{x+3y}$ precursor obtained above is then added to the ternary material, and after mixing, a composite material is obtained; also in this process, the mixing method may be mechanical mixing, magnetic stirring, mechanical ball milling, or a combination of thereof. The mixing time is 10 hours to 30 hours, more specifically, the mixing time is 12 hours to 20 hours. The present application has no particular limitation on the preparation method of the ternary material, which may be carried out according to methods well known to those persons of ordinary skill in the art. The addition amount of the $Li_xM_yF_{x+3y}$ precursor is 0.1-15wt% of the ternary material. Specifically, the addition amount of the $Li_xM_yF_{x+3y}$ precursor is 0.1-5wt% of the ternary material. More specifically, the addition amount of the $Li_xM_yF_{x+3y}$ precursor is 0.1%, 0.5%, 1%, 2%, 3%, 4% and 5%.

According to the present invention, the composite material is finally sintered at high temperature in a pure oxygen atmosphere to obtain a ternary composite material. In the present application, the sintering is carried out in one of a muffle furnace, a tube furnace and a box furnace, the sintering temperature is 250-650°C, in a specific embodiment, the sintering temperature is 280-600°C; the sintering time is 5-20h, in a specific embodiment, the sintering time is 8-12h.

The present application also provides a solid-state lithium-ion battery, which includes a positive electrode and a negative electrode, and the material of the positive electrode is the ternary composite material described in the above scheme.

In a solid-state lithium-ion battery, other components such as a negative electrode, a solid electrolyte, etc. are all components of lithium-ion batteries such as negative electrodes and solid electrolytes well known to those persons of ordinary skill in the art, which will not be repeated herein.

The present application provides a high-voltage-resistant $Li_xM_yF_{x+3y}$ in-situ coated ternary positive electrode material suitable for solid-state lithium-ion batteries, a preparation method thereof and a solid-state lithium-ion battery, where a $Li_xM_yF_{x+3y}$ precursor is uniformly mixed with the ternary positive electrode material and a layer of uniformly distributed fast ion conductor $Li_xM_yF_{x+3y}$ is in-situ coated on the surface of the ternary material during high-temperature sintering. On the one hand, the presence of $Li_xM_yF_{x+3y}$ improves the interfacial contact between the ternary positive electrode material and the solid electrolyte, improves the high-voltage resistance performance of the solid electrolyte, reduces the side reactions between the ternary positive electrode and the solid electrolyte and the electrolyte decomposition caused by high voltage; and on the other hand, the fast ion conductor properties of $Li_xM_yF_{x+3y}$ effectively improve the lithium ion conductivity of the ternary positive electrode material and reduce the residual lithium on the surface of the ternary positive electrode material. The present invention has simple operation, low raw material cost and small equipment investment in the whole preparation process and is suitable for batch production.

In order to further understand the present invention, the ternary composite material provided by the present invention is described in detail below in conjunction with embodiments, and the protection scope of the present invention is not limited by the following embodiments.

Example 1

S1, lithium nitrate as a lithium source, ammonium fluoride as a fluorine source and aluminum nitrate as an aluminum source are mixed according to a stoichiometric ratio by mechanical stirring for 10 hours to obtain a $Li_xM_yF_{x+3y}$ precursor.

S2, the $Li_xM_yF_{x+3y}$ precursor having a mass fraction of 0.1% and obtained in step S1 is added to the ternary positive electrode material, and subjected to mechanical stirring for 10 hours to obtain a mixed positive electrode material.

S3, the mixed positive electrode material obtained in step S2 is sintered at 280°C in a box furnace for 8 hours, and cooled to obtain a $Li_3AlF_6$-coated ternary positive electrode material.

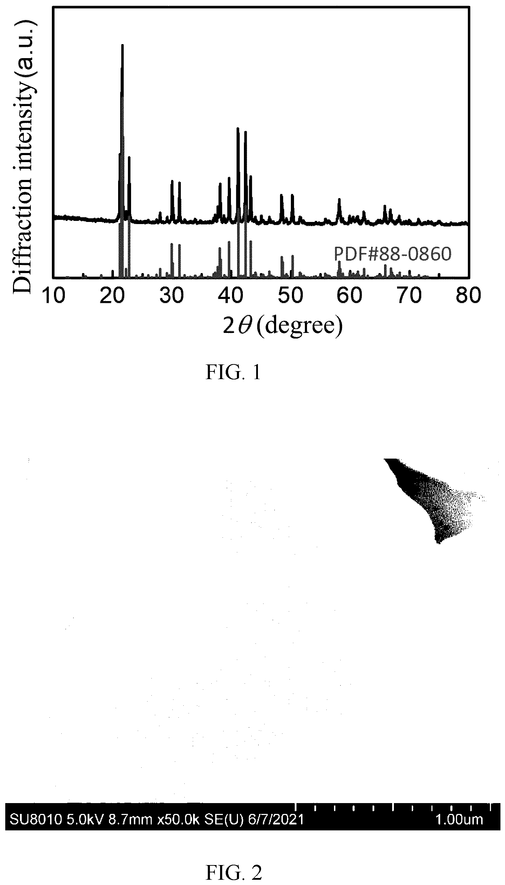

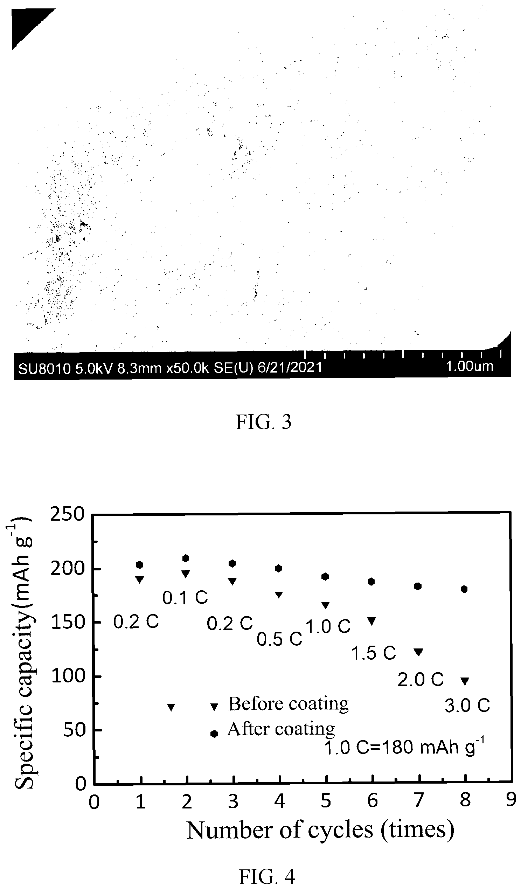

FIG. 1 is the XRD diagram of the $Li_3AlF_6$ precursor sintered at 280°C in Example 1 of the invention, and FIGs 2 and 3 are SEM images of the ternary positive electrode material $LiNi_{0.86}Co_{0.09}Mn_{0.05}O_2$ in Example 1 of the invention before and after coating. It can be seen from FIGs 2 and 3 that after the ternary positive electrode are in situ coated with the fast ion conductor $Li_3AlF_6$, the $Li_3AlF_6$ nanoparticles are clearly visible and evenly distributed on the surface of the ternary material, and the surface becomes rough. The original size of the ternary material is not changed after coating.

Example 2

S1, lithium hydroxide as a lithium source, lithium fluoride as a fluorine source and cobalt oxide as a cobalt source are mixed according to a stoichiometric ratio by mechanical ball milling for 28 hours to obtain a $LiCoF_4$ precursor.

S2, the $LiCoF_4$ precursor having a mass fraction of 5% and obtained in step S1 is added to the ternary positive electrode material $LiNi_{0.83}Co_{0.1}Mn_{0.07}O_2$, and subjected to mechanical ball milling for 30 hours to obtain a mixed positive electrode material.

S3, the mixed positive electrode material obtained in step S2 is sintered at 650°C in the box furnace for 20 hours, and cooled to obtain a $LiCoF_4$-coated ternary positive electrode material.

The $LiCoF_4$-coated ternary positive electrode material in this embodiment is assembled into a solid-state battery according to the following steps.

For a positive electrode sheet, the ternary positive electrode material, a conductive agent, a binder and a solid electrolyte are dissolved in a certain amount of solvent at the mass ratio of 70%: 2%: 2%: 26%, and mixed into a slurry with moderate viscosity, and then the slurry is evenly applied on an aluminum foil. The coated electrode sheet is placed in a vacuum oven at 120°C and dried for 2h. After it is completely dried, it is cut into circular electrode sheets with a diameter of 10mm using a punching machine. After recording their mass, the circular electrode sheets are placed in the vacuum oven at 120°C for 12h to remove moisture, and finally stored in a glove box under an argon atmosphere. The areal loading of each prepared electrode sheet is around $15mg/cm^2$. The prepared electrode sheet is used as the positive electrode and is assembled into an all-solid-state battery using the metal lithium sheet as the counter electrode, and the sulfide electrolyte or the halide electrolyte as the solid electrolyte.

Battery test: the voltage window for battery charging and discharging is 2.5-4.25V; the rate test is carried out in the order of 0.2C charge/0.2C discharge, 0.5C charge/0.1C discharge, 0.5C charge/0.2C discharge, 0.5C charge/0.5C discharge, 0.5C charge/1.OC discharge, 0.5C charge/1.3C discharge, 0.5C charge/1.5C discharge, 0.5C charge/2.0C discharge and 0.5C charge/3.0C discharge.

FIG. 4 is the charge and discharge rate curves of the coated and uncoated ternary positive electrode materials in Example 2 of the present invention. It can be seen from FIG. 4 that the rate performance of the ternary material is greatly improved after coating, especially at high current density, the capacity retention rate of the coated ternary material is relatively high. The reversible capacities of the uncoated ternary material at current densities of 0.1C, 0.2C, 0.5C, 1.0C, 1.5C, 2.0C and 3.0C (1.0C=180mAh/g) are only 195.5, 188.5, 175.7, 165.9, 150.2, 121.7 and 94.3mAh/g, respectively; the discharge capacities of the coated ternary material at current densities of 0.1C, 0.2C, 0.5C, 1.0C, 1.5C, 2.0C and 3.0C can reach 209.8, 204.2, 199.2, 191.9, 186.7, 182.5 and 179.1mAh/g, respectively.

Example 3

S1, lithium carbonate as a lithium source, ammonium fluoride as a fluorine source and ferric hydroxide as an aluminum source are mixed according to a stoichiometric ratio by magnetic stirring for 20 hours to obtain a $Li_3FeF_6$ precursor.

S2, the $Li_3FeF_6$ precursor having a mass fraction of 2.5% and obtained in step S1 is added to the ternary positive electrode material $LiNi_{0.9}Co_{0.05}Mn_{0.05}O_2$, and subjected to magnetic stirring for 20 hours to obtain a mixed positive electrode material.

S3, the mixed positive electrode material obtained in step S2 is sintered at 400°C in the box furnace for 10 hours, and cooled to obtain a $Li_3FeF_6$-coated ternary positive electrode material.

The $Li_3FeF_6$-coated ternary positive electrode material in this embodiment is assembled into a battery according to the following steps.

For a positive electrode sheet, the ternary positive electrode material, a conductive agent, a binder and a solid electrolyte are dissolved in a certain amount of solvent at the mass ratio of 70%: 2%: 2%: 26%, and mixed into a slurry with moderate viscosity, and then the slurry is evenly coated on the aluminum foil. The coated electrode sheet is placed in a vacuum oven at 120°C and dried for 2h. After it is completely dried, it is cut into circular electrode sheets with a diameter of 10mm using a punching machine. After recording their mass, the circular electrode sheets are placed in the vacuum oven at 120°C and dried for 12h to remove moisture, and finally stored in the glove box under an argon atmosphere. The areal loading of each prepared electrode sheet is around $15mg/cm^2$.

The prepared electrode sheet is used as the positive electrode and is assembled into an all-solid-state battery using the metal lithium sheet as the counter electrode, and the sulfide electrolyte or the halide electrolyte as the solid electrolyte. Battery test: the voltage window for battery charging and discharging is 2.5-4.25V and the cycle test is carried out by performing 0.5C charge/0.5C discharge for 150 cycles.

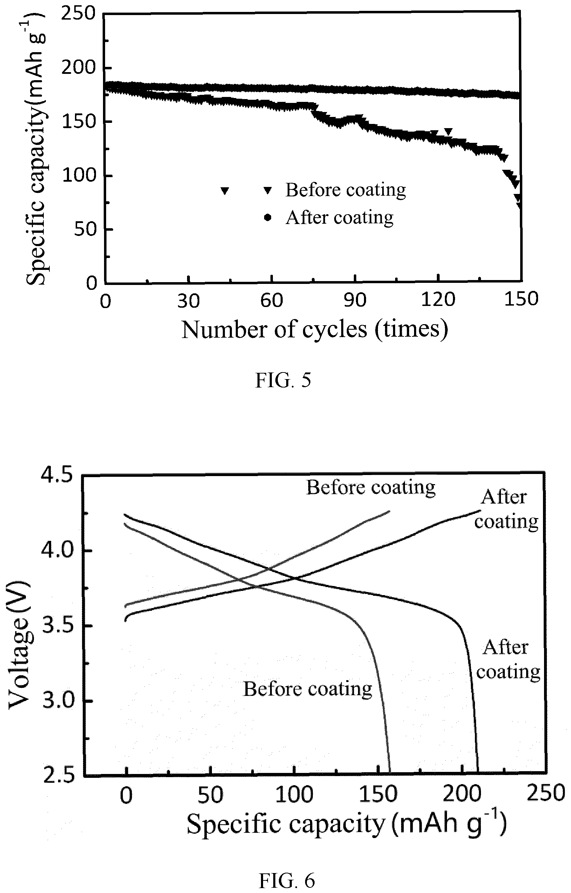

FIG. 5 is the cycle performance curve of the coated and uncoated ternary positive electrode materials in Example 3 of the present invention. It can be seen from FIG. 5 that the cycle performance of the ternary material is greatly improved after coating, especially at high current density, the capacity retention rate of the coated ternary material is relatively high. After it is charged and discharged at a current density of 0.5C for 150cycles, the capacity of the uncoated ternary material is only 71.6mAh/g; after coating, the cycle stability of the ternary material is greatly improved, and the discharge capacity is 176.7mAh/g after 150 cycles.

Example 4

S1, lithium carbonate as a lithium source, lithium fluoride as a fluorine source and cerium oxide as a cerium source are mixed according to a stoichiometric ratio by magnetic stirring for 20 hours to obtain a $Li_3Ce_2F_9$ precursor.

S2, the $Li_3Ce_2F_9$ precursor having a mass fraction of 0.5% and obtained in step S1 is added to the ternary positive electrode material $LiNi_{0.8}Co_{0.1}Mn_{0.1}O_2$, and subjected to magnetic stirring for 20 hours to obtain a mixed positive electrode material by.

S3, the mixed positive electrode material obtained in step S2 is sintered at 500°C in the box furnace for 12 hours, and cooled to obtain a $Li_3Ce_2F_9$-coated ternary positive electrode material.

The $Li_3Ce_2F_9$-coated ternary positive electrode material in this embodiment is assembled into a solid-state battery according to the following steps.

For a positive electrode sheet, the ternary positive electrode material, a conductive agent, a binder and a solid electrolyte are dissolved in a certain amount of solvent at the mass ratio of 70%: 2%: 2%: 26%, and mixed into a slurry with moderate viscosity, and then the slurry is evenly coated on the aluminum foil. The coated electrode sheet is placed in a vacuum oven at 120°C and dried for 2h. After it is completely dried, it is cut into circular electrode sheets with a diameter of 10mm using a punching machine. After recording their mass, the circular electrode sheets are placed in the vacuum oven at 120°C for 12h to remove moisture, and finally stored in the glove box under an argon atmosphere. The areal loading of each prepared electrode sheet is around 15mg/cm². The prepared electrode sheet is used as the positive electrode and is assembled into an all-solid-state battery using the metal lithium sheet as the counter electrode, and the sulfide electrolyte or the halide electrolyte as the solid electrolyte.

Battery test: the voltage window for battery charging and discharging is 2.5-4.25V; and the current density is 0.1C for charging and discharging.

FIG. 6 is a charge-discharge curve of the coated and uncoated ternary positive electrode material in Example 4 of the present invention. It can be seen from FIG. 6 that the capacity of the ternary material is greatly improved after coating.

Example 5

S1, lithium carbonate as a lithium source, lithium fluoride as a fluorine source and cobalt nitrate as a cobalt source are mixed according to a stoichiometric ratio by magnetic stirring for 20 hours to obtain a $Li_3CoF_6$ precursor.

S2, the $Li_3CoF_6$ precursor having a mass fraction of 1.5% and obtained in step S1 is added to the ternary positive electrode material $LiNi_{0.85}Co_{0.05}Mn_{0.1}O_2$, and subjected to magnetic stirring for 20 hours to obtain a mixed positive electrode material.

S3, the mixed positive electrode material obtained in step S2 is sintered at 500°C in the box furnace for 12 hours, and cooled to obtain a $Li_3CoF_6$-coated ternary positive electrode material.

The $Li_3CoF_6$-coated ternary positive electrode material in this embodiment is assembled into a solid-state battery according to the following steps.

For a positive electrode sheet, the ternary positive electrode material, a conductive agent, a binder and a solid electrolyte are dissolved in a certain amount of solvent at the mass ratio of 70%: 2%: 2%: 26%, and mixed into a slurry with moderate viscosity, and then the slurry is evenly coated on the aluminum foil. The coated electrode sheet is placed in a vacuum oven at 120°C and dried for 2h. After it is completely dried, it is cut into circular electrode sheets with a diameter of 10mm using a punching machine. After recording their mass, the circular electrode sheets are placed in the vacuum oven at 120°C for 12h to remove moisture, and finally stored in the glove box under an argon atmosphere. The areal loading of each prepared electrode sheet is around 15mg/cm². The prepared electrode sheet is used as the positive electrode and is assembled into an all-solid-state battery using the metal lithium sheet as the counter electrode, and the sulfide electrolyte or the halide electrolyte as the solid electrolyte.

Battery test: the voltage window for battery charging and discharging is 2.5-4.25V, and the current density is 0.1C for charging and discharging.

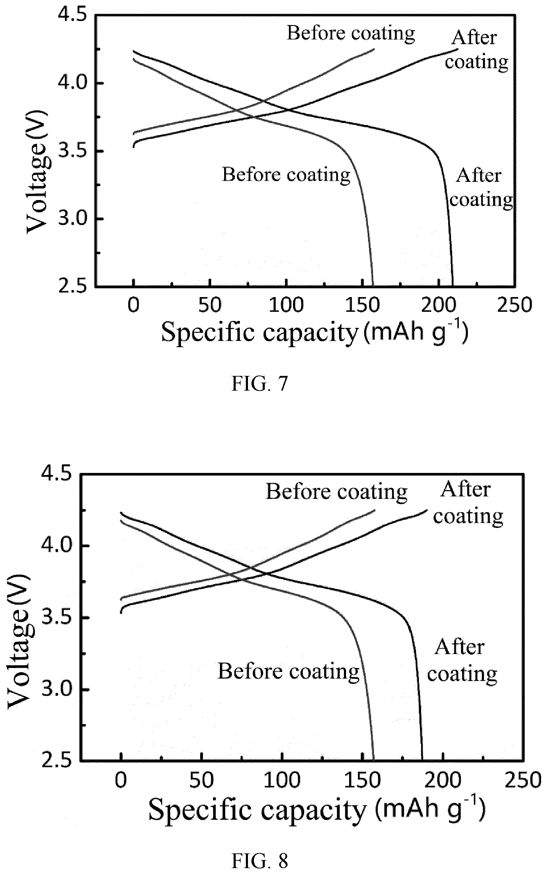

FIG. 7 is a charge-discharge curve of the coated and uncoated ternary positive electrode materials in Example 5 of the present invention. It can be seen from FIG. 7 that the capacity of the ternary material is greatly improved after coating.

Example 6

S1, lithium carbonate as a lithium source, lithium fluoride as a fluorine source and iron oxide as an iron source are mixed according to a stoichiometric ratio by magnetic stirring for 20 hours to obtain a $LiFeF_4$ precursor.

S2, the $LiFeF_4$ precursor having a mass fraction of 0.25% and obtained in step S1 is added to the ternary positive electrode material $LiNi_{0.88}Co_{0.06}Mn_{0.06}O_2$, and subjected to magnetic stirring for 20 hours to obtain a mixed positive electrode material.

S3, the mixed positive electrode material obtained in step S2 is sintered at 600°C in the box furnace for 12 hours,

and cooled to obtain a $LiFeF_4$-coated ternary positive electrode material.

The $LiFeF_4$-coated ternary positive electrode material in this embodiment is assembled into a solid-state battery according to the following steps.

For a positive electrode sheet, the ternary positive electrode material, a conductive agent, a binder and a solid electrolyte are dissolved in a certain amount of solvent at the mass ratio of 70%: 2%: 2%: 26%, and mixed into a slurry with moderate viscosity, and then the slurry is evenly coated on the aluminum foil. The coated electrode sheet is placed in a vacuum oven at 120°C and dried for 2h. After it is completely dried, it is cut into circular electrode sheets with a diameter of 10mm using a punching machine. After recording their mass, the circular electrode sheets are placed in the vacuum oven at 120°C for 12h to remove moisture, and finally stored in the glove box under an argon atmosphere. The areal loading of each prepared electrode sheet is around $15mg/cm^2$. The prepared electrode sheet is used as the positive electrode and is assembled into an all-solid-state battery using the metal lithium sheet as the counter electrode, and the sulfide electrolyte or the halide electrolyte as the solid electrolyte.

Battery test: the voltage window for battery charging and discharging is 2.5-4.25V, and the current density is 0.1C for charging and discharging.

FIG. 8 is a charge-discharge curve of the coated and uncoated ternary positive electrode materials in Example 6 of the present invention. It can be seen from FIG. 8 that the capacity of the ternary material is greatly improved after coating.

Example 7

S1, lithium carbonate as a lithium source, lithium fluoride as a fluorine source and ferric chloride as an iron source are mixed according to a stoichiometric ratio by magnetic stirring for 20 hours to obtain a $Li_2FeF_5$ precursor.

S2, the precursor obtained in step S1 is sintered at 600°C in a box furnace for 12 hours, and cooled to obtain $LiFeF_4$ powder.

At room temperature, the prepared $LiFeF_4$ fast ion conductor is subjected to electrochemical impedance spectroscopy test using stainless steel as an electrode. The result is: lithium ion conductivity of $2.5 \times 10^{-5}$ S/cm.

Example 8

S1, lithium carbonate as a lithium source, lithium fluoride as a fluorine source and cerium chloride as a cerium source are mixed according to a stoichiometric ratio by magnetic stirring for 20 hours to obtain a $Li3CeF_6$ precursor.

S2, the precursor obtained in step S1 is sintered at 600°C in a box furnace for 12 hours, and cooled to obtain $Li3CeF_6$ powder.

At room temperature, the prepared $Li3CeF_6$ fast ion conductor is subjected to electrochemical impedance spectroscopy test using stainless steel as an electrode. The result is: lithium ion conductivity of $1.5 \times 10^{-5}$ S/cm.

Example 9

S1, lithium carbonate as a lithium source, lithium fluoride as a fluorine source and aluminum fluoride as an aluminum source are mixed according to a stoichiometric ratio by magnetic stirring for 20 hours to obtain a $LiAlF_4$ precursor.

S2, the precursor obtained in step S1 is sintered at 600°C in a box furnace for 12 hours, and cooled to obtain $LiAlF_4$ powder.

At room temperature, the prepared $LiAlF_4$ fast ion conductor is subjected to electrochemical impedance spectroscopy test using stainless steel as an electrode. The result is: lithium ion conductivity of $8 \times 10^{-5}$ S/cm.

Example 10

S1, lithium carbonate as a lithium source, ammonium bifluoride as a fluorine source and cobalt oxide as a cobalt source are mixed according to a stoichiometric ratio by magnetic stirring for 20 hours to obtain a $Li_3Co_2F_9$ precursor.

S2, the precursor obtained in step S1 is sintered at 600°C in a box furnace for 12 hours, and cooled to obtain $Li_3Co_2F_9$ powder.

At room temperature, the prepared $Li_3Co_2F_9$ fast ion conductor is subjected to electrochemical impedance spectroscopy test using stainless steel as an electrode. The result is: lithium ion conductivity of $9 \times 10^{-5}$ S/cm.

Example 11

S1, lithium fluoride as a lithium source, and aluminum fluoride as a fluorine source and an aluminum source are mixed according to a stoichiometric ratio by a planetary ball mill for 20 hours to obtain a $Li_3AlF_6$ precursor.

S2, the $Li_3AlF_6$ precursors obtained in step S1 and having a mass fraction of 0.5wt%, 1.0wt%, 1.5wt%, 2.0wt% and 2.5wt% are each added to the ternary positive electrode material $LiNi_{0.85}Co_{0.05}Mn_{0.1}O_2$; and mixed for 20 hours by a planetary ball mill to obtain a mixed positive electrode material.

S3, the mixed positive electrode material obtained in step S2 is sintered at 500°C in a box furnace for 12 hours, and cooled to obtain ternary positive electrode materials coated with 0.5wt%, 1.0wt%, 1.5wt%, 2.0wt% and 2.5wt% $Li_3AlF_6$ respectively.

The $Li_3AlF_6$-coated ternary positive electrode material in this embodiment is assembled into a solid-state battery according to the following steps.

For a positive electrode sheet, the ternary positive electrode material, a conductive agent, a binder and a solid electrolyte are dissolved in a certain amount of solvent at the mass ratio of 70%: 2%: 2%: 26%, and mixed into a slurry with moderate viscosity, and then the slurry is evenly coated on the aluminum foil. The coated electrode sheet is placed in a vacuum oven at 120°C and dried for 2h. After it is completely dried, it is cut into circular electrode sheets with a diameter of 10mm using a punching machine. After recording their mass, the circular electrode sheets are placed in the vacuum oven at 120°C for 12h to remove moisture, and finally stored in the glove box under an argon atmosphere. The areal loading of each prepared electrode sheet is around 15mg/cm$^2$. The prepared electrode sheet is used as the positive electrode and is assembled into an all-solid-state battery using the metal lithium sheet as the counter electrode, and the sulfide electrolyte or the halide electrolyte as the solid electrolyte.

Battery test: the voltage window for battery charging and discharging is 2.5-4.25V, and the current density is 0.5C for charging and discharging.

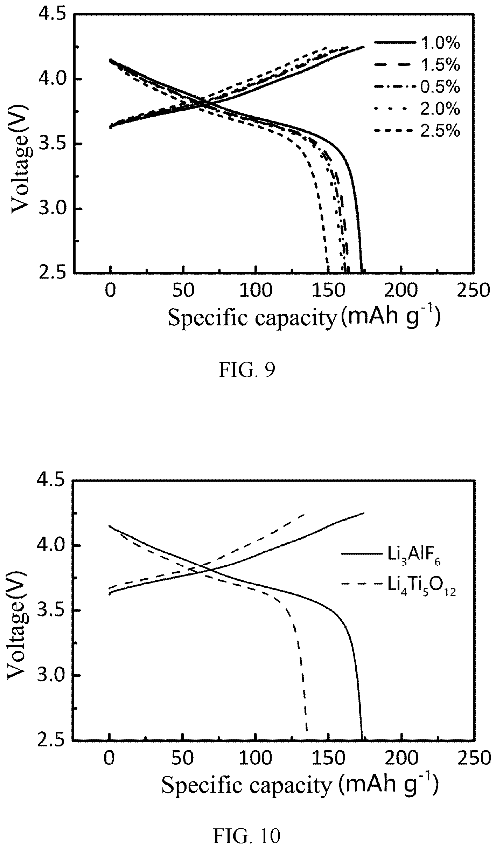

FIG. 9 shows the charge-discharge curve of the ternary positive electrode materials coated with 0.5wt%, 1.0wt%, 1.5wt%, 2.0wt% and 2.5wt% $Li_3AlF_6$ in Example 11 of the present invention in a sulfide all-solid-state battery. It can be seen from FIG. 9 that the ternary positive electrode material coated with 1.0wt% $Li_3AlF_6$ exhibits the best performance.

Example 12

S1, lithium fluoride as a lithium source, and aluminum fluoride as a fluorine source and an aluminum source are mixed in a stoichiometric ratio by a planetary ball mill for 20 hours to obtain a $Li_3AlF_6$ precursor; and lithium hydroxide as a lithium source and titanium dioxide as a titanium source are mixed in a stoichiometric ratio by the planetary ball mill for 20 hours to obtain a $Li_4Ti_5O_{12}$ precursor.

S2, 1.0wt% by mass fraction of the $Li_3AlF_6$ and $Li_4Ti_5O_{12}$ precursors obtained in step S1 are each added to the ternary positive electrode material $LiNi_{0.85}Co_{0.05}Mn_{0.1}O_2$, and mixed for 20 hours by a planetary ball mill to obtain a mixed positive electrode material.

S3, the mixed positive electrode obtained in step S2 is sintered at 500°C in a box furnace for 12 hours, and cooled to obtain ternary positive electrode materials coated with 1.0wt% $Li_3AlF_6$ and 1.0wt% $Li_4Ti_5O_{12}$ respectively.

The ternary positive electrode materials coated with 1.0wt% $Li_3AlF_6$ and 1.0wt% $Li_4Ti_5O_{12}$ in this embodiment are each assembled into a solid-state battery according to the following steps.

For a positive electrode sheet, the ternary positive electrode material, a conductive agent, a binder and a solid electrolyte are dissolved in a certain amount of solvent at the mass ratio of 70%: 2%: 2%: 26%, and mixed into a slurry with moderate viscosity, and then the slurry is evenly coated on the aluminum foil. The coated electrode sheet is placed in a vacuum oven at 120°C and dried for 2h. After it is completely dried, it is cut into circular electrode sheets with a diameter of 10mm using a punching machine. After recording their mass, the circular electrode sheets are placed in the vacuum oven at 120°C for 12h to remove moisture, and finally stored in the glove box under an argon atmosphere. The areal loading of each prepared electrode sheet is around 15mg/cm$^2$. The prepared electrode sheet is used as the positive electrode and is assembled into an all-solid-state battery using the metal lithium sheet as the counter electrode, and the sulfide electrolyte or the halide electrolyte as the solid electrolyte.

Battery test: the voltage window for battery charging and discharging is 2.5-4.25V, and the current density is 0.5C for charging and discharging.

FIG. 10 is the charge-discharge curve of the ternary positive electrode materials coated with $Li_3AlF_6$ and $Li_4Ti_5O_{12}$ respectively in Example 12 of the present invention in a sulfide all-solid-state battery. It can be seen from FIG. 10 that the ternary positive electrode material coated with 1.0wt% $Li_3AlF_6$ exhibits better performance.

Example 13

S1, lithium fluoride as a lithium source, and aluminum fluoride as a fluorine source and an aluminum source are mixed according to a stoichiometric ratio by a planetary ball mill for 20 hours to obtain a $Li_3AlF_6$ precursor.

S2, 1.0wt% by mass fraction of the $Li_3AlF_6$ precursor obtained in step S1 and 1.0wt% by mass fraction of the $Li_3AlF_6$ finished product are each added to the ternary positive electrode material $LiNi_{0.85}Co_{0.05}Mn_{0.1}O_2$, and mixed for 20 hours by a planetary ball mill to obtain mixed positive electrode materials.

S3, the mixed positive electrode materials obtained in step S2 are sintered at 500°C in a box furnace for 12 hours and cooled to obtain two 1.0wt% $Li_3AlF_6$-coated ternary positive electrode materials. However, when the ternary positive electrode material coated with the $Li_3AlF_6$ finished product is sieved, white powder appears, indicating that part of the $Li_3AlF_6$ finished product is not coated on the surface of the ternary positive electrode material.

The two 1.0wt% $Li_3AlF_6$-coated ternary positive electrode materials in this embodiment are each assembled into a solid-state battery according to the following steps.

For the positive electrode sheet, the ternary positive electrode material, a conductive agent, a binder and a solid electrolyte are dissolved in a certain amount of solvent at the mass ratio of 70%: 2%: 2%: 26%, and mixed into a slurry with moderate viscosity, and then the slurry is evenly coated on the aluminum foil. The coated electrode sheet is placed in a vacuum oven at 120°C and dried for 2h. After it is completely dried, it is cut into circular electrode sheets with a diameter of 10mm using a punching machine. After recording their mass, the circular electrode sheets are placed in the vacuum oven at 120°C for 12h to remove moisture, and finally stored in the glove box under an argon atmosphere. The areal loading of each prepared electrode sheet is around $15mg/cm^2$. The prepared electrode sheet is used as the positive electrode and is assembled into an all-solid-state battery using the metal lithium sheet as the counter electrode, and the sulfide electrolyte or the halide electrolyte as the solid electrolyte.

Battery test: the voltage window for battery charging and discharging is 2.5-4.25V, and the current density is 0.5C for charging and discharging.

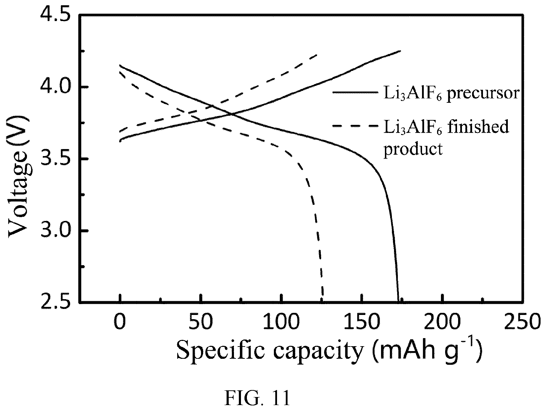

FIG. 11 shows the charge-discharge curve of two 1.0wt% $Li_3AlF_6$-coated ternary positive electrode materials in Example 13 of the present invention in a sulfide all-solid-state battery. It can be seen from FIG. 11 that the ternary positive electrode material coated with 1.0wt% $Li_3AlF_6$ precursor exhibits better performance.

The description of the above embodiments is only used to help understand the method and core concept of the present invention. It should be pointed out that for persons of ordinary skill in the art, several improvements and modifications can be made to the present invention without departing from the principles of the present invention. These improvements and modifications also fall within the protection scope of the claims of the present invention.

The above description of the disclosed embodiments enables those persons of ordinary skill in the art to implement or use the present invention. Various modifications to these embodiments will be readily apparent to those persons of ordinary skill in the art, and the general principles defined herein may be implemented in other embodiments without departing from the spirit or scope of the invention. Thus, the present invention will not be limited to the embodiments shown herein but is to conform to the widest scope consistent with the principles and novel features disclosed herein.

**Claims**

1. A ternary composite material for an all-solid-state battery, comprising a ternary material and a fast ion conductor in situ coated on a surface of the ternary material, the fast ion conductor being represented by formula (I);

$$Li_xM_yF_{x+3y} \qquad (I);$$

wherein M is a trivalent metal ion;

$$1 \le x \le 3, \; 1 \le y \le 3.$$

2. The ternary composite material according to claim 1, wherein the M is selected from Co, Fe, Al or Ce; and the fast ion conductor is selected from $Li_3AlF_6$, $LiCoF_4$, $Li_3FeF_6$, $Li_3CoF_6$, $Li_3Ce_2F_9$, $LiFeF_4$, $Li_3CeF_6$, $LiAlF_4$ or $Li_3Co_2F_9$.

3. The ternary composite material according to claim 1, wherein the high-nickel ternary material is $LiNi_aCo_bR_{1-a-b}O_2$, and wherein R is Al or Mn, $0.6 < a < 0.96$, and $0 < b \le 0.1$.

4. The ternary composite material according to claim 1, wherein an average particle size of the $Li_xM_yF_{x+3y}$ is 5nm or more, and the high-nickel ternary composite material has a D50 of 3-5$\mu$m, a specific surface area of $0.1-1m^2/g$, and a coating ratio of >85%.

5. A preparation method for the ternary composite material according to claim 1, comprising the following steps:

   A) mixing a lithium source, a fluorine source and a trivalent metal compound in a stoichiometric ratio to obtain a $Li_xM_yF_{x+3y}$ precursor;
   B) adding the $Li_xM_yF_{x+3y}$ precursor into a ternary material and mixing to obtain a composite material;

C) sintering the composite material at high temperature in a pure oxygen atmosphere to obtain a $Li_xM_yF_{x+3y}$-coated ternary composite material.

6. The preparation method according to claim 5, wherein the lithium source is selected from one or more of lithium nitrate, lithium hydroxide, lithium carbonate and lithium fluoride; the fluorine source is selected from one or more of ammonium fluoride, ammonium bifluoride, hydrogen fluoride, aluminum fluoride and lithium fluoride; and the trivalent metal compound is selected from one or more of cobalt nitrate, ferric nitrate, cerium nitrate, aluminum nitrate, cobalt oxide, iron oxide, cerium oxide, aluminum oxide, cobalt fluoride, iron fluoride, cerium fluoride, aluminum fluoride, cobalt hydroxide, ferric hydroxide, cerium hydroxide and aluminum hydroxide.

7. The preparation method according to claim 5, wherein an addition amount of the $Li_xM_yF_{x+3y}$ precursor is 0.1-15wt% of the ternary material.

8. The preparation method according to claim 5, wherein in step A), the mixing is one or more of mechanical stirring, magnetic stirring and mechanical ball milling; in step A), a mixing time is 10 to 30 hours; in step B), the mixing is one or more of mechanical stirring, magnetic stirring and mechanical ball milling; in step B), a mixing time is 10 to 30 hours.

9. The preparation method according to claim 5, wherein in step C), a sintering temperature is 250-650°C and a sintering time is 5-20 hours.

10. A solid-state lithium-ion battery, comprising a positive electrode and a negative electrode, wherein a material of the positive electrode is the ternary composite material according to any one of claims 1 to 4 or a ternary composite material prepared by the preparation method according to any one of claims 5 to 9.

FIG. 1

SU8010 5.0kV 8.7mm x50.0k SE(U) 6/7/2021          1.00um

FIG. 2

SU8010 5.0kV 8.3mm x50.0k SE(U) 6/21/2021    1.00um

FIG. 3

FIG. 4

FIG. 5

FIG. 6

FIG. 7

FIG. 8

FIG. 9

FIG. 10

FIG. 11

## INTERNATIONAL SEARCH REPORT

| | International application No. |
|---|---|
| | **PCT/CN2023/077848** |

**A.    CLASSIFICATION OF SUBJECT MATTER**

H01M4/62(2006.01)i;H01M4/36(2006.01)i;H01M4/485(2010.01)i

According to International Patent Classification (IPC) or to both national classification and IPC

**B.    FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

VEN; CNABS; CNTXT; WOTXT; EPTXT; USTXT; CNKI; IEEE: 三元, 包覆, 包裹, 涂层, 涂覆, 涂敷, 表面, 快离子导体, 氟, 前驱体, 烧结, ternary, coat+, surface, ion 1w conductor, fluorine, precursor, sinter

**C.    DOCUMENTS CONSIDERED TO BE RELEVANT**

| Category* | Citation of document, with indication, where appropriate, of the relevant passages | Relevant to claim No. |
|---|---|---|
| PX | CN 114614012 A (NINGBO RONBAY NEW ENERGY TECHNOLOGY CO., LTD.) 10 June 2022 (2022-06-10) <br> description, paragraphs 37-139 | 1-10 |
| X | US 2020152976 A1 (THE BOARD OF TRUSTEES OF THE LELAND STANFORD JUNIOR UNIVERSITY) 14 May 2020 (2020-05-14) <br> description, paragraphs 25-92 | 1-10 |
| A | CN 108091857 A (SOUNDON NEW ENERGY TECHNOLOGY CO., LTD.) 29 May 2018 (2018-05-29) <br> entire document | 1-10 |
| A | US 2022216463 A1 (LG CHEMICAL LTD.) 07 July 2022 (2022-07-07) <br> entire document | 1-10 |
| A | WO 2017025957 A1 (TECHNION RESEARCH & DEVELOPMENT FOUNDATION LTD.) 16 February 2017 (2017-02-16) <br> entire document | 1-10 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 May 2023** | **17 May 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/077848**

| Patent document cited in search report | | | Publication date (day/month/year) | Patent family member(s) | | | Publication date (day/month/year) |
|---|---|---|---|---|---|---|---|
| CN | 114614012 | A | 10 June 2022 | None | | | |
| US | 2020152976 | A1 | 14 May 2020 | WO | 2018222366 | A2 | 06 December 2018 |
| | | | | WO | 2018222366 | A3 | 28 March 2019 |
| CN | 108091857 | A | 29 May 2018 | None | | | |
| US | 2022216463 | A1 | 07 July 2022 | KR | 20210066745 | A | 07 June 2021 |
| | | | | EP | 3944372 | A1 | 26 January 2022 |
| | | | | EP | 3944372 | A4 | 03 August 2022 |
| | | | | WO | 2021107684 | A1 | 03 June 2021 |
| | | | | JP | 2022529817 | A | 24 June 2022 |
| WO | 2017025957 | A1 | 16 February 2017 | US | 2018233770 | A1 | 16 August 2018 |
| | | | | JP | 2018523276 | A | 16 August 2018 |
| | | | | EP | 3335258 | A1 | 20 June 2018 |
| | | | | EP | 3335258 | A4 | 10 April 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210246513